# EUROPÄISCHE PATENTSCHRIFT

(11) **EP 3 281 852 B1**
(45) Veröffentlichungstag und Bekanntmachung des Hinweises auf die Patenterteilung: **27.11.2019**
(21) Anmeldenummer: 17001375.9
(22) Anmeldetag: 10.08.2017
(51) Int. Cl.: B62J 7/08, B62J 11/00

(54) **BEHÄLTER-ADAPTER FÜR FAHRRAD-GEPÄCKTRÄGER**
CONTAINER-ADAPTER FOR BICYCLE LUGGAGE CARRIER
ADAPTATEUR DE RÉCIPIENT POUR PORTE-BAGAGE DE BICYCLETTE

(30) Priorität: 13.08.2016 DE 102016010026
(43) Veröffentlichungstag der Anmeldung: 14.02.2018
(73) Patentinhaber: RIXEN & KAUL GmbH, 42699 Solingen (DE)
(72) Erfinder: Flammann, Norbert, 42653 Solingen (DE); Rixen, Edgar, 42699 Solingen (DE)

(56) Entgegenhaltungen:
- DE-A1-102006 055 463
- DE-A1-102011 009 447
- DE-U1-202014 103 375

## Beschreibung

Die Erfindung betrifft mit einem ersten Aspekt einen Behälter-Adapter für Fahrrad-Gepäckträger und mit mindestens einer den Gepäckträger brückenden, ein- oder mehrteiligen Traverse, mit mindestens zwei Riegeln. Die Behälter werden vorzugsweise auf die Oberseite des hinteren Gepäckträgers des Fahrrades aufgesetzt. Die Gepäckträger sind handelsüblicher Art, mit einer Reling auf beiden Längsseiten. Als Behälter kommen Boxen, Körbe oder Taschen infrage. Die Erfindung betrifft in einem zweiten Aspekt ein Verfahren zur Verriegelung eines Behälter-Adapters mit den Längsstreben eines Fahrrad-Gepäckträgers.

Aus der DE 10 2011 009 447 A1 ist ein Gepäckbehältnis mit einem Adapter zur Befestigung auf einem Fahrrad-Gepäckträger bekannt. Häufiges Abnehmen und Aufsetzen des Gepäckbehältnisses sind bei dieser Befestigungslösung sehr komfortabel. Gepäckträger und Adapter sind speziell aufeinander abgestimmt. Eine universelle Verwendung des Adapters erscheint ausgeschlossen.

Aus der gattungsbildenden DE 10 2006 055 463 A1 ist eine Befestigungslösung für eine Gepäckträgertasche zur seitlichen Anbringung an einem Fahrrad-Gepäckträger bekannt. Die Gepäckträgertasche ist an die Reling des Gepäckträgers oder an eine dazu parallele Stange außen am Gepäckträger angehängt. Die Gepäckträgertasche kann bei Kurvenfahrt abschwingen. Das lässt sich durch geeignete, aber an dieser Stelle nicht gezeigte Fanghaken unterbinden. Ein auf den Gepäckträger aufgesetztes Gepäckbehältnis muss dahingegen an zwei Stellen in einer Querebene zur Fahrradebene fixiert werden. Die dort gezeigte Gepäcktasche hängt an zwei Haken. Riegel verschließen im angehängten Zustand die Hakenöffnungen und sind in Sperrrichtung federnd abgestützt. Diese Lösung ist für aufgesetztes Gepäck ungeeignet. Es gibt bei seitlich angehängten Gepäckbehältnissen keine den Gepäckträger überbrückenden Traversen. Das ist eine andersartige Lösung für einen andersartigen Zweck (Transport von Reisegepäck).

Der Erfindung liegt die Aufgabe zugrunde, einen in der Bedienung einfachen Adapter zu schaffen, der den Behälter sicher auf dem Gepäckträger hält.

Die Aufgabe wird in einem ersten Aspekt durch einen Behälter-Adapter gemäß Anspruch 1 und in einem zweiten Aspekt durch ein Verfahren gemäß Anspruch 12 gelöst.

Durch die Verlagerung der Feder(n) unter das Niveau der Gepäckträgerpritsche entsteht ein besonders flacher Adapter. Die Riegel sind um eine horizontale, sich in Fahrtrichtung erstreckende Achse schwenkbar. Im verriegelnden Zustand haben die Riegel mit ihrem als Handhabe fassbaren Teil eine gute Zugänglichkeit. Durch die Verwendung von Riegelhaken wird die Adapterbefestigung unempfindlich gegen leichte Fluchtungsfehler bei nicht exakt montierten Adaptern. Die Federelemente sind im verriegelten Zustand zur Gänze unterhalb der Gepäckträgerpritsche angeordnet.

In Ausgestaltung der Erfindung ist vorgesehen, dass jeder Riegel schwenkbar ist und einen Träger, einen daran geführten Schieber und ein Federelement, das beide verbindet, aufweist, wobei der Träger an seinem aus dem Schieber herausragenden Abschnitt ein seitlich versetztes Gelenkelement trägt. Diese Merkmale stellen eine glückliche Fügung dar, weil sie eine kompakte Bauweise erlauben, die eine sichere Befestigung des Adapters am Gepäckträger gewährleistet.

In weiterer Ausgestaltung der Erfindung ist vorgesehen, dass der Schieber gleichzeitig eine Handhabe darstellt. Zu den Vorzügen dieses Merkmals gehört einmal, wie vorstehend, die kompakte Bauweise und die Sicherheit in der Verriegelung und in der Handhabung. Es gibt an der Unterseite des Behälters an dem kurzen Aufbau des Adapters auf der Gepäckträgerpritsche nur ein Teil auf jeder Längsseite, an dem man verriegeln kann.

Nach einem ergänzenden Merkmal der Erfindung sind mindestens zwei den Gepäckträger brückende Traversen, vorgesehen.

Nach einer bevorzugten Weiterbildung der Erfindung ist vorgesehen, dass mindestens eine Aussteifung zwischen den Traversen vorgesehen ist. Diese Aussteifung kann durch einen entsprechend steif ausgebildeten Behälterboden, an den der Adapter angeschraubt oder genietet ist, oder durch eine entsprechend ausgesteifte Konstruktion des Adapters selbst erzielt werden.

In bevorzugter Ausgestaltung der Erfindung ist vorgesehen, dass als Mittel zur Voreinstellung der Lage eines betrachteten Riegels mindestens eine Aussteifung mit zwei Stücken der Traversen orthogonal zur Fahrradebene gegenüber dem Adapter im Übrigen verschiebbar und festlegbar ist. Damit wird die Breite des Adapters, genau genommen der Abstand zwischen den beiden Riegeln, an die Gepäckträgerbreite angepasst.

In weiterer Ausgestaltung der Erfindung ist vorgesehen, dass die Traversen und die Aussteifungen ein Rahmengeviert bilden.

Nach einer bevorzugten Weiterbildung der Erfindung ist vorgesehen, dass an den Traversen oder ihren Aussteifungen oder an den Riegeln mindestens ein nach unten weisender Vorsprung vorgesehen ist, der im verriegelten Zustand zwischen die Längs- und die Querstreben des Gepäckträgers greift. Damit wird verhindert, dass der Behälter mit dem an seiner Unterseite befindlichen Adapter nach hinten vom Gepäckträger abrutscht.

Nach einer bevorzugten Weiterbildung der Erfindung ist vorgesehen, dass die Schwenkachse des Riegels im verriegelten Zustand oberhalb der Längsstrebe des Gepäckträgers angeordnet ist. Dadurch wird die einzelne Spannrichtung hinreichend senkrecht und die beiden Spannrichtungen etwa parallel.

Nach einer anderen Weiterbildung der Erfindung ist vorgesehen, dass der Schieber bei der verriegelnden Schwenkbewegung gegen die Kraft des Federelements über einen Nocken geführt wird, bevor er mit der Längsstrebe des Gepäckträgers in Kontakt kommt. Durch diese Maßnahme wird der von den Riegeln beherrschbare Durchmesserbereich an Gepäckträger-Längsstreben erweitert. Ähnliches macht der ungelenke oder für das Pferd zu kleine Reiter, wenn er sich einen Schemel neben das Pferd stellt und zunächst auf den Schemel steigt, um sich dann auf das Pferd zu schwingen.

In weiterer Ausgestaltung der Erfindung ist vorgesehen, dass der Schieber in seinem zentralen Längsschnitt die Form eines menschlichen Unterschenkels mit nach unten gekrümmten Zehen aufweist. Dabei ist der Unterschenkel von dem Träger durchdrungen und an dem Träger geführt. In dem Unterschenkel ist zusätzlich die den Träger einschließende Feder untergebracht, die für die Spannung des Riegels gegen die Längsstrebe sorgt.

In ihrem zweiten Aspekt ist die Erfindung verfahrensmäßig dadurch gekennzeichnet, dass die Verriegelung des Behälter-Adapters mit den Längsstreben des Fahrrad-Gepäckträgers durch Einschwenken von mindestens zwei Riegeln mit gefederten Riegelhaken unter die Längsstreben erfolgt. Dabei geschieht das Einfedern der als Schieber ausgebildeten Riegelhaken beim Einschwenken der Riegel in mindestens zwei Stufen: Während der ersten Stufe werden die gefederten Riegelhaken eines jeden Riegels über mindestens einen Nocken am Adapter geführt und in der zweiten Stufe des Einfederns der Riegelhaken werden die Riegelhaken über den nach unten weisenden Bauch der verriegelten Längsstreben unter Rückfederung in die Verriegelungsstellung geleitet.

Im Verlauf dieser Schwenkbewegung der beiden Riegel, die zur Verriegelung des Adapters mit dem Gepäckträger führt, drückt der Nocken den als Schieber ausgebildeten Hakenriegel soweit nach unten bis die gekrümmten Zehen des Schiebers auf den Äquator des größten zu erwartenden Längsstreben-Querschnitts auf die Längsstreben aufsetzen, von wo aus im Verlauf der weiteren Schwenkbewegung beider Riegel der Tiefpunkt des jeweiligen Längsstreben-Profils von dem Fuß unterfahren wird und bei Abschluss der Schwenkbewegung die Fußsohle die verriegelte Gepäckträger-Längsstrebe gegen den Adapter drückt.

Die Erfindung wird im Einzelnen anhand der Zeichnung erläutert, dabei zeigen:
- Fig. 1:: eine perspektivische Unteransicht unter einen Gepäckträger mit daran verriegeltem Adapter;
- Fig. 2:: den Adapter in Unteransicht;
- Fig. 3:: eine aufgeschnittene Ansicht der Riegelsituation gem. Linie III-III in Fig.1.

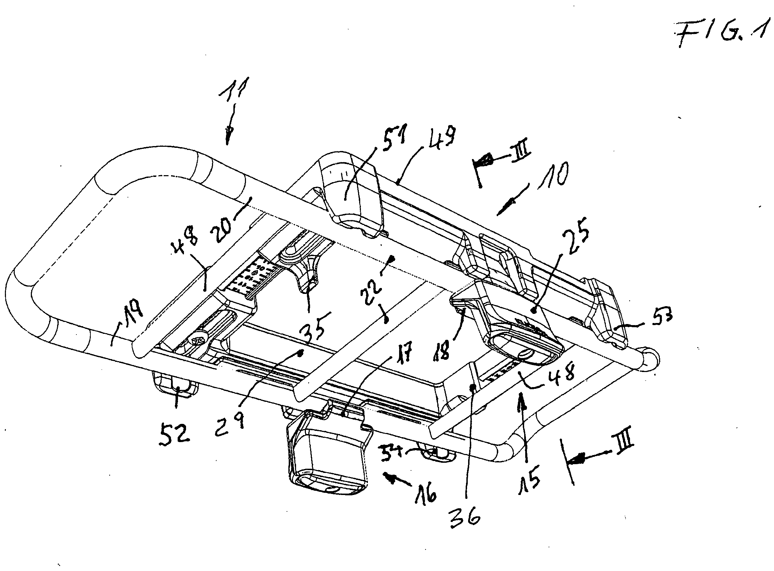

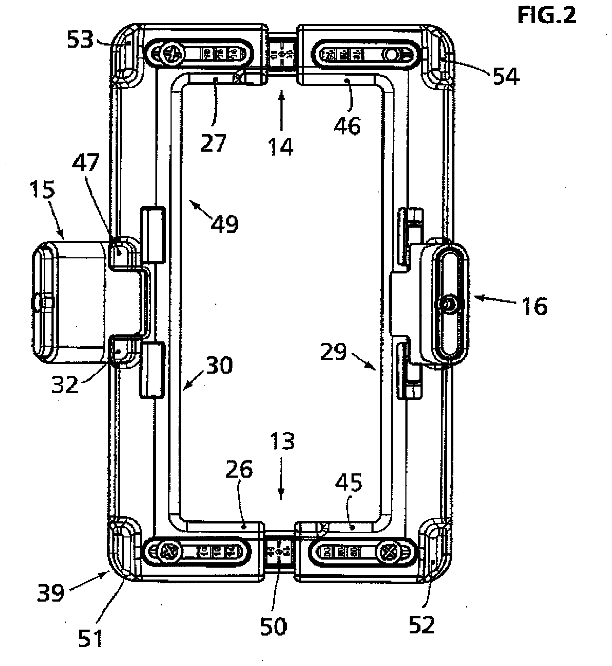

Fig.1 zeigt einen Behälter-Adapter 10 für Fahrrad-Gepäckträger 11 mit mindestens einer den Gepäckträger 11 brückenden, ein- oder mehrteiligen Traverse 13, 14 (s. Fig. 2), mit mindestens zwei Riegeln 15, 16 mit Riegelhaken 17, 18 am Adapter 10 für die Verbindung der beiden äußersten Längsstreben 19, 20 des Gepäckträgers 11 mit dem Adapter 10. Dabei sind die Riegelhaken 17, 18 in Richtung der Verspannung von Adapter 10 und Gepäckträger 11 gefedert, wobei die Feder(n) 21 unterhalb der Gepäckträgerpritsche 22 angeordnet ist/sind.

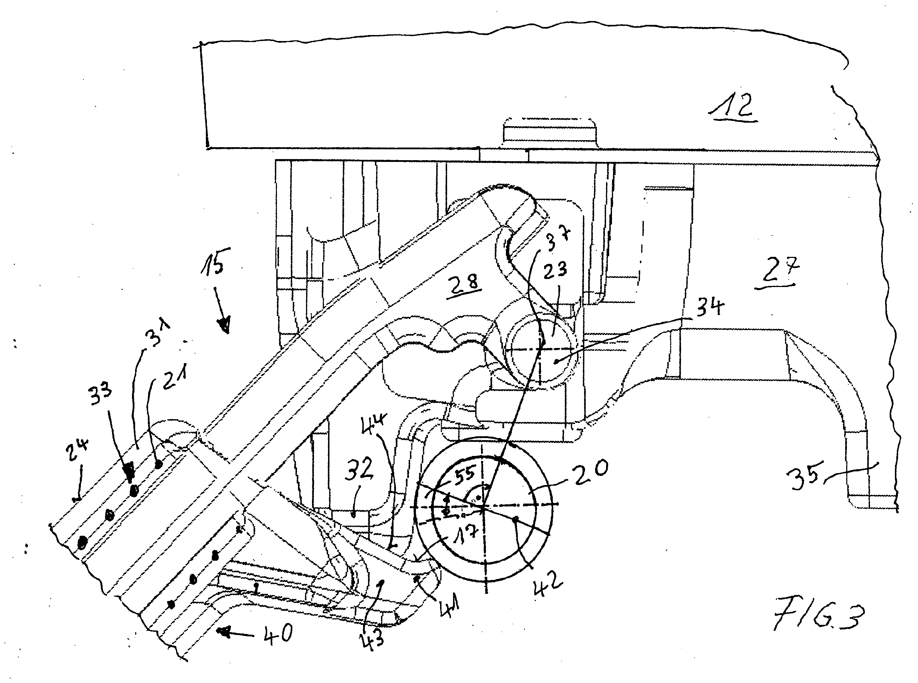

Die Riegel 15, 16 sind in ihrer räumlichen Lage voreinstellbar (s. Fig.2) dabei untergreifen die Riegelhaken 17,18 im verriegelnden Zustand, von oben kommend, je eine Längsstrebe 19, 20 des Gepäckträgers 11. Die Riegel 15, 16 sind an mindestens einer gegenständlichen Achse 23 (s. Fig. 3) drehbar gelagert und weisen je eine Handhabe 24, 25 zur Betätigung dieser Riegel 15, 16 auf. An den Traversen 13, 14 ist je ein nach unten weisender Vorsprung 35, 36 vorgesehen, der im verriegelten Zustand zwischen die Längs- 19, 20 und die Querstreben 48 des Gepäckträgers 11 greift.

Fig. 2 zeigt zwei den Gepäckträger 11 brückende Traversen 13, 14, die Teil eines Rahmengevierts 39 sind. Weiterhin sind zwei Aussteifungen 29, 49 gezeigt, die die Traversen 13, 14 verbinden. Die Traverse 13 besteht aus den Abschnitten 26, 45, die durch eine mehrfach gelochte Stange 50 miteinander verschraubt sind. So lässt sich die wirksame Länge der Traverse 13 an die Breite des Gepäckträgers 11 anpassen. Entsprechendes gilt für die Traverse 14 mit den Abschnitten 27 und 46. Dadurch lassen sich die Traversenabschnitte 26, 27; 45, 46 mit ihren Aussteifungen 29, 49 orthogonal zur Fahrradebene gegenüber dem Adapter 10 im Übrigen auf das gewünschte Längenmaß verschieben und festlegen, was einen einfachen, übersichtlichen Weg zur einmaligen Anpassung nach Erwerb des Adapters 10 an die Gepäckträgerbreite darstellt.

An den vier Ecken des Rahmengevierts 39 sind vier Füße 51, 52, 53, 54 vorgesehen, die aufgrund ihrer Höhe oben das Auflager und die Seitenführung für die Längsstreben 19, 20 bilden und, bei vom Gepäckträger 11 abgenommenem Behälter 12 mit Adapter 10, mit ihrer Fußfläche auf dem Boden aufsteht.

In Fig. 3 ist gezeigt, dass und wie der Riegel 15 schwenkbar ist und dass er einen Träger 28, einen daran geführten Schieber 31 und ein Federelement 33 umfasst, das beide verbindet, wobei der Träger 28 an seinem aus dem Schieber 31 herausragenden Abschnitt ein seitlich versetztes Gelenkelement 34 trägt. Der Riegel 15 wird beim Ver- und Entriegeln um die Gelenkachse 37 geschwenkt.

Hierzu wird die gekürzt dargestellte Handhabe 24, die außen an dem Schieber 31 ausgebildet ist, betätigt, wobei letzterer eine Führung für den Träger 28 umfasst.

Die Schwenkachse 23 des Riegels 15 ist im verriegelten Zustand oberhalb der Längsstrebe 20 angeordnet. Dabei hat der Schieber 31 die Form eines menschlichen Unterschenkels mit einem Fuß 43, einer Fußsohle 44 und gekrümmten Zehen 41, die als Riegelhaken 17, 18 fungieren.

Der Schieber 31 wird bei der verriegelnden Schwenkbewegung gegen die Kraft des Federelements 33 über einen Nocken 32, 47 geführt und dabei abgesenkt, bevor er mit der Längsstrebe 20 des Gepäckträgers 11 in Kontakt kommt.

Im Verlauf der Schwenkbewegung des Riegels 15, die zur Verriegelung führt, drücken zunächst die Nocken 32, 47 den Schieber 31 soweit nach unten, bis die gekrümmten Zehen 41 des Schiebers 31 hinter den Äquator 42, zuzüglich eines Reibwinkels 55, bei dem größten zu erwartenden Längsstreben-Querschnitt auf die Längsstrebe 19, 20 aufsetzen.

Von dort aus wird im Verlauf der weiteren Schwenkbewegung des Riegels 15 der Tiefpunkt des Längsstreben-Profils von dem Fuß 43 unterfahren und bei Abschluss der Schwenkbewegung wird die Fußsohle 44 die verriegelte Gepäckträger-Längsstrebe 19, 20 gegen den Adapter 10 drückt und die eingezogenen Zehen 41 im Zusammenwirken mit den gegenüberliegenden Füßen 52, 54 ein seitliches Herausrutschen der Längsstrebe 20 verhindern.

## Patentansprüche

1. Behälter-Adapter (10) für einen Fahrrad-Gepäckträger (11) mit einer Gepäckträgerpritsche (22)
b) mit mindestens zwei Riegeln (15, 16) mit Riegelhaken (17, 18) am Adapter (10) für die
b 1) Verbindung einer der beiden äußersten Längsstreben (19, 20) des Gepäckträgers (11) mit dem Adapter (10); wobei, in einem verriegelten Zustand des Adapters auf dem Gepäckträger,
b 1 α) die Riegelhaken (17,18) in Richtung der Verspannung von Adapter (10) und Gepäckträger (11) gefedert sind,
b 2) die Feder(n) (21) ist/sind, zumindest teilweise, unterhalb der Gepäckträgerpritsche (22) angeordnet;
d) die Riegelhaken (17, 18) untergreifen, im verriegelnden Zustand, von unten kommend, je eine Längsstrebe (19, 20) des Gepäckträgers (11),
e) die Riegel (15, 16) sind an mindestens einer gegenständlichen Achse (23) drehbar gelagert und weisen je eine Handhabe (24, 25) zur Betätigung dieser Riegel (15, 16) auf;
**dadurch gekennzeichnet,**
a) dass der Adapter (10) mindestens eine den Gepäckträger (11) brückende, ein- oder mehrteilige Traverse (13, 14) aufweist und
c) dass die Riegel (15, 16) in ihrer räumlichen Lage voreinstellbar sind.

2. Behälter-Adapter (10) für Fahrrad-Gepäckträger (11), nach Anspruch 1, **dadurch gekennzeichnet, dass** jeder Riegel (15, 16) schwenkbar ist und einen Träger (28), einen daran geführten Schieber (31) und ein Federelement (33), das beide verbindet, aufweist, wobei der Träger (28) an seinem aus dem Schieber (31) herausragenden Abschnitt ein seitlich versetztes Gelenkelement (34) trägt.

3. Behälter-Adapter (10) für Fahrrad-Gepäckträger (11) nach Anspruch 2, **dadurch gekennzeichnet, dass** der Schieber (31) gleichzeitig die Handhabe (24) darstellt.

4. Behälter-Adapter (10)für Fahrrad-Gepäckträger (11) nach Anspruch 1, **gekennzeichnet durch** mindestens zwei den Gepäckträger (11) brückende Traversen (13, 14).

5. Behälter-Adapter (10) für Fahrrad-Gepäckträger (11) nach Anspruch 4, **dadurch gekennzeichnet, dass** mindestens eine Aussteifung (29, 49) zwischen den Traversen (13,14) vorgesehen ist.

6. Behälter-Adapter (10) für Fahrrad-Gepäckträger (11) nach Anspruch 1, **dadurch gekennzeichnet, dass** als Mittel zur Voreinstellung der Lage eines betrachteten Riegels (15, 16) mindestens eine Aussteifung (29, 49) mit zwei Stücken (26, 27, 45, 46) der Traversen (13, 14) orthogonal zur Fahrradebene gegenüber dem Adapter (10) im Übrigen verschiebbar und festlegbar ist.

7. Behälter-Adapter (10) für Fahrrad-Gepäckträger (11) nach Anspruch 5, **dadurch gekennzeichnet, dass** die Traversen (13, 14) und die Aussteifung(en) (29, 49) ein Rahmengeviert (39) bilden.
Rixen & Kaul GmbH - 11 - Patentanmeldung P110EP.i2u

8. Behälter-Adapter (10) für Fahrrad-Gepäckträger (11) nach Anspruch 6, **dadurch gekennzeichnet dass** an den Traversen (13, 14) oder ihren Aussteifungen (29, 49) oder an den Riegeln (15, 16) mindestens ein nach unten weisender Vorsprung (35, 36) vorgesehen ist, der im verriegelten Zustand zwischen die Längs- (19, 20) und die Querstreben (48) des Gepäckträgers (11) greift.

9. Behälter-Adapter (10) für Fahrrad-Gepäckträger (11) nach Anspruch 8, **dadurch gekennzeichnet, dass** die Schwenkachse (23) des Riegels (15, 16) im verriegelten Zustand oberhalb der Längsstrebe (19, 20) angeordnet ist.

10. Behälter-Adapter (10) für Fahrrad-Gepäckträger (11) nach Anspruch 8 oder 9, **dadurch gekennzeichnet, dass** der Schieber (31) bei der verriegelnden Schwenkbewegung gegen die Kraft des Federelements (33) über einen Nocken (32, 47) geführt wird, bevor er mit der Längsstrebe (19, 20) des Gepäckträgers (11) in Kontakt kommt.

11. Behälter-Adapter (10) für Fahrrad-Gepäckträger (11) nach Anspruch 8 oder 10, **dadurch gekennzeichnet, dass** der Schieber (31) in seinem zentralen Längsschnitt die Form eines menschlichen Unterschenkels (40) mit Fuß (43) und mit gekrümmten Zehen (41) aufweist.

12. Verfahren zur Verriegelung eines Behälter-Adapters (10) mit Längsstreben (19, 20) eines Fahrrad-Gepäckträgers (11), **dadurch gekennzeichnet,**
f) dass das Verriegeln durch Einschwenken von mindestens zwei Riegeln (15, 16) mit gefederten Riegelhaken (17,18) unter die Längsstreben (19, 20) erfolgt,
g) dabei erfolgt das Einfedern der Riegelhaken (17, 18) beim Einschwenken der Riegel (15, 16) in mindestens zwei Stufen;
h) während der ersten Stufe werden die gefederten Riegelhaken (17, 18) eines jeden Riegels (15, 16) über mindestens einen Nocken (32,47) am Adapter (10) geführt und
i) in der zweiten Stufe des Einfederns der Riegelhaken (17, 18) werden diese über den nach unten weisenden Bauch der zu verriegelnden Längsstreben (19, 20) unter Rückfederung in die Verriegelungsstellung geleitet.

## Claims

1. A container adapter (10) for a bicycle luggage carrier (11) comprising a luggage carrier platform (22)
b) comprising at least two latches (15, 16) comprising locking hooks (17, 18) provided on the adapter (10) for
b1) the connection of one of the two outmost longitudinal bracings (19, 20) of the luggage carrier (11) with the adapter (10);
wherein in a locked condition of the adapter on the luggage carrier
b1α) the locking hooks (17, 18) are tongued in the direction of the clamping of the adapter (10) and the luggage carrier (11),
b2) the spring(s) (21) is/are at least partially arranged beneath the luggage carrier platform (22);
c) the latches (15, 16), in the locked state, coming from beneath, reach under respectively one longitudinal bracing (19, 20) of a luggage carrier (11),
d) the latches (15, 16) are mounted on at least one objective joint axis (23) so as to be rotatable and comprise each a handle (24, 25) for actuating these latches (15, 16),
**characterized in**
a) **that** the adapter (10) comprises at least one one-piece or multi-piece traverse (13, 14) which spans the luggage carrier (11) and
b) **that** the latches (15, 16) can be pre-adjusted with respect to the spatial location thereof.

2. A container adapter (10) for a bicycle luggage carrier (11) according to claim 1, **characterized in that** each latch (15, 16) can be pivoted and comprises a carrier (28), a slide (31) guided thereon and a spring element (33) which connects both to each other, wherein the carrier (28), on its section projecting out of the slide (31), carries a laterally offset hinged element (34).

3. A container adapter (10) for a bicycle luggage carrier (11) according to claim 2, **characterized in that** the slide (31) simultaneously is the handle (24).

4. A container adapter (10, 50) for a bicycle luggage carrier (11) according to claim 1, **characterized by** at least two traverses (13, 14) that span the luggage carrier (11).

5. A container adapter (10) for a bicycle luggage carrier (11) according to claim 4, **characterized in that** at least one stiffening reinforcement (29, 49) is provided between the traverses (13, 14).

6. A container adapter (10) for a bicycle luggage carrier (11) according to claim 1, **characterized in that** as means for pre-adjusting the position of a considered latch (15, 16) at least one stiffening reinforcement (29, 49) with two sections (26, 27, 45, 46) of the traverse (13, 14) can be displaced and fixed orthogonally to the bicycle plane with respect to the adapter (10).

7. A container adapter (10) for a bicycle luggage carrier (11) according to claim 5, **characterized in that** the traverses (13, 14) and the stiffening reinforcement(s) (29, 49) form(s) a frame quad (39).

8. A container adapter (10) for a bicycle luggage carrier (11) according to claim 6, **characterized in that** at least one downwards directed protrusion (35, 36) is provided on the traverses (13, 14) or the stiffening reinforcements (29, 49) thereof or on the latches (15, 16), which protrusion (35, 36), in the locked condition, reaches between the longitudinal bracings (19, 20) and cross bars (48) of the luggage carrier (11).

9. A container adapter (10) for a bicycle luggage carrier (11) according to claim 8, **characterized in that** in the locked condition the pivot axis (23) of the latch (15, 16) is arranged above the longitudinal bracing (19, 20).

10. A container adapter (10) for a bicycle luggage carrier (11) according to claim 8 or 9, **characterized in that** during the locking swivel movement the slide (31) is guided over a cam (32, 47) against the force of the spring element (33) before getting into contact with the longitudinal bracing (19, 20) of the luggage carrier (11).

11. A container adapter (10) for a bicycle luggage carrier (11) according to claim 8 or 10, **characterized in that** in its central longitudinal section the slide (31) comprises the shape of a human lower leg (40) with foot (43) and with bent toes (41).

12. A method for locking a container adapter (10) with the longitudinal bracings (19, 20) of a bicycle luggage carrier (11), **characterized in**
f) that the locking is realized by swivelling in at least two latches (15, 16) having tongued locking hooks (17, 18) beneath the longitudinal bracings (19, 20),
g) herein, the deflecting movement of the locking hooks (17, 18), when the latches (15, 16) are swivelled in, is realized in at least two steps;
h) during the first step the tongued locking hooks (17, 18) of each latch (15, 16) are guided over at least one cam (32, 47) on the adapter (10) and
i) in the second step of the deflection of the locking hooks (17, 18) these ones are passed over the downwards directed bulge of the longitudinal bracings (19, 20) to be locked while springing back into the locking position.

## Revendications

1. Adaptateur de récipient (10) pour un porte-bagages de bicyclette (11) comprenant un plateau de porte-bagages (22)
b) comprenant au moins deux verrous (15, 16) comprenant des crochets de verrouillage (17, 18) prévus sur l'adaptateur (10) pour
b1) la liaison entre l'une de deux entretoises longitudinales (19, 20) les plus extérieures du porte-bagages (11) et l'adaptateur (10) ;
dans lequel dans l'état verrouillé de l'adaptateur sur le porte-bagages,
b1α) les crochets de verrouillage (17, 18) sont montés élastiquement dans la direction du serrage de l'adaptateur (10, 50) et du porte-bagages (11),
b2) le/les ressort(s) (21) est/sont disposé(s) au moins partiellement au-dessous du plateau de porte-bagages (22) ;
c) dans l'état verrouillé, les crochets de verrouillage (17, 18) venant du bas passent chacun pas dessous d'une entretoise longitudinale (19, 20) du porte-bagages (11),
d) les verrous (15, 16) sont logés de manière rotative sur au moins un axe d'articulation concret (23) et ils comprennent chacun une poignée (24, 25) pour actionner ces verrous (15, 16) ;
caractérisé en ce
a) que l'adaptateur (10) comprend au moins une traverse (13, 14) réalisée en une ou plusieurs parties, laquelle traverse enjambe le porte-bagages (11) et
b) que les verrous (15, 16) peuvent être préfixés dans leur position spatiale.

2. Adaptateur de récipient (10) pour un porte-bagages de bicyclette (11) selon la revendication 1, **caractérisé en ce que** chaque verrou (15, 16) peut être pivoté et il comprend un support (28), un curseur (31) guidé sur celui-ci et un élément de ressort (33), qui relie l'un à l'autre, dans lequel le support (28) porte un élément d'articulation (34) décalé latéralement sur sa partie faisant saillie à partir du curseur (31).

3. Adaptateur de récipient (10) pour un porte-bagages de bicyclette (11) selon la revendication 2, **caractérisé en ce que** le curseur (31) est simultanément la poignée (24).

4. Adaptateur de récipient (10) pour un porte-bagages de bicyclette (11) selon la revendication 1, **caractérisé par** au moins deux traverses (13, 14), qui enjambent le porte-bagages (11).

5. Adaptateur de récipient (10) pour un porte-bagages de bicyclette (11) selon la revendication 4, **caractérisé en ce qu'**au moins un renfort (29, 49) est prévu entre les traverses (13, 14).

6. Adaptateur de récipient (10) pour un porte-bagages de bicyclette (11) selon la revendication 1, **caractérisé en ce que** comme des moyens pour pré-ajuster la position d'un verrou considéré (15, 16) au moins un renfort (29, 49) avec deux parties (26, 27, 45, 46) des traverses (13, 14) peut être déplacée et fixée de manière orthogonale au plan de la bicyclette par rapport à l'adaptateur (10).

7. Adaptateur de récipient (10) pour un porte-bagages de bicyclette (11) selon la revendication 5, **caractérisé en ce que** les traverses (13, 14) et le(s) renfort(s) (29, 49) forment un carré de cadre (39).

8. Adaptateur de récipient (10) pour un porte-bagages de bicyclette (11) selon la revendication 6, **caractérisé en ce qu'**au moins une saillie (35, 36) dirigée vers le bas est prévue sur les traverses (13, 14) ou sur ses renforts (29, 49) ou sur les verrous (15, 16), laquelle saillie (35, 36) passe entre les entretoises longitudinales (19, 20) et les entretoises transversales (48) du porte-bagages (11) à l'état verrouillé.

9. Adaptateur de récipient (10) pour un porte-bagages de bicyclette (11) selon la revendication 8, **caractérisé en ce que** l'axe de pivotement (23) du verrou (15, 16) est disposé au-dessus de l'entretoise longitudinale (19, 20) à l'état verrouillé.

10. Adaptateur de récipient (10) pour un porte-bagages de bicyclette (11) selon la revendication 8 ou la revendication 9, **caractérisé en ce que** pendant le mouvement de pivotement verrouillant le curseur (31) est guidé sur une came (32, 47) contre la force de l'élément de ressort (33) avant de venir en contact avec l'entretoise longitudinale (19, 20) du porte-bagages (11).

11. Adaptateur de récipient (10) pour un porte-bagages de bicyclette (11) selon la revendication 8 ou la revendication 10, **caractérisé en ce que** dans sa section longitudinale centrale le curseur (31) comprend la forme d'une jambe (40) humaine avec un pied (43) et avec des orteils courbés (41).

12. Procédé de verrouillage d'un adaptateur de récipient (10) avec les entretoises longitudinales (19, 20) d'un porte-bagages de bicyclette (11), **caractérisé en** ce
f) que le verrouillage se fait par faire pivoter au moins deux verrous (15, 16) ayant des crochets de verrouillage (17, 18) montés élastiquement au-dessous des entretoises longitudinales (19, 20),
g) le rabattement élastique des crochets de verrouillage (17, 18) pendant le pivotement des verrous (15, 16) se faisant dans au moins deux étapes ;
h) pendant la première étape les crochets de verrouillage (17, 18) montés élastiquement de chaque verrou (15, 16) sont guidés sur au moins une came (32, 47) sur l'adaptateur (10) et
i) dans la deuxième étape du rabattement élastique des crochets de verrouillage (17, 18) ceux-ci sont guidés sur le ventre dirigé vers le bas des entretoises longitudinales (19, 20) à verrouiller en rebondissant dans la position de verrouillage.
